# EUROPEAN PATENT APPLICATION

(11) **EP 1 245 323 A1**
(43) Date of publication of application: **02.10.2002**
(21) Application number: 02251735.3
(22) Date of filing: 12.03.2002
(51) Int. Cl.: B23K 9/173, B23K 9/00, B23K 9/04

(54) **Method and apparatus for building up a workpiece by deposit welding**

(30) Priority: 27.03.2001 GB 0107564
(71) Applicant: ROLLS-ROYCE PLC, London, SW1E 6AT (GB)
(72) Inventor: Jones, Steven Alan, Hilton, Derby DE65 5HN (GB)
(74) Representative: Gunn, Michael Alan

(57) **Abstract**

Apparatus and a method for forming a workpiece (38) by deposition welding comprises a welding head (12) having at least two wires (22,24) of weld material extending therethrough. Each wire (22,24) is formed of weld material such that an electric current is passed therethrough, the wires become molten and form the weld material of the workpiece (38). The wires (22,24) are controlled independently.

## Description

This invention relates to a method and apparatus for forming a workpiece. More specifically this invention relates to a method and apparatus for forming a workpiece by a deposition welding process such as a metal inert gas welding process other (otherwise known as MIG).

It is known to produce metal workpieces by the deposition of weld material onto a base plate. Processes such as MIG utilise a weld torch positioned adjacent the plate on which a workpiece is to be produced, an electrode being provided within the weld torch such that when an electric current is passed therethrough an arc is formed between the weld torch electrode and the base plate. This arc generates heat allowing the welding process to take place by melting of the electrode and forming a weld pool in the surface of the workpiece.

A similar but alternative process in this field is known as tungsten inert gas welding (TIG). In this process the electrode is formed from a metal with a high melting point such as tungsten such that the electrode does not melt during the welding process. An electrical arc is struck between the tungsten tip and the workpiece by a current that is applied to the electrode. This arc generates heat which then melts the material of the base plate allowing a separate welding wire to be fed into the weld pool and thus form a workpiece. In the TIG welding process, the feed wire that is introduced to form the weld is consumable and is delivered automatically by a wire feed unit.

The MIG welding process is similar to the TIG process in that a welding torch is provided adjacent the base plate upon which the workpiece is to be formed. However in the MIG process the electrode is consumable as it acts as both the arc initiator and the weld wire.

With both processes it is difficult to produce walls of components which have variable cross-section thicknesses. Also the TIG welding process requires part of the base plate to be heated to a molten state with the arc prior to the introduction of the weld wire. This requires a large current to be used.

According to the present invention there is provided apparatus for forming a workpiece comprising a welding head, said welding head adapted to be located, in use, adjacent to a work surface upon which the workpiece is to be formed, at least two electrodes being partially located within said welding head and extending therefrom, said electrodes comprising wires formed from weld material such that when a current is passed through said wires an electric arc is formed between each wire and the work surface such that the wires and the work surface become molten, each of said wires being controlled independently.

Preferably the wires are controlled independently such that the distance between said wire ends and said work surface may be controlled.

At least one of said wires may be arranged such that one of its ends extends from the welding head to a predetermined distance from said work surface such that said distance is different to the distance between said work surface and an adjacent wire end.

The wires may be angled toward one another at their welding ends.

The speed that each wire is fed through the welding head may be independently controllable.

The wires may be located within a shroud of gas.

Also according to the present invention there is provided a method of forming a workpiece comprising the steps of providing at least two wires of weld material within a welding head positioned adjacent a work surface upon which the workpiece is to be formed, passing an electric current through said welding wires such that each wire forms an electrode and an electric arc is formed between the electrodes and the work surface, feeding said wires through said welding head such that a workpiece of weld material is built up on said work surface, and controlling each wire independently as it is fed through said welding head.

Preferably that the speed rate at which each wire is fed through the welding torch is independently controlled.

The voltage supplied to each wire may be different.

The current supplied to each wire may be different.

The current through at least one wire may be alternating current and the current passed through another wire may be direct current. The wire having alternating current passed therethrough may be adjacent a wire having direct current passed therethrough. Embodiments of the present invention will now be described by way of example only with reference to the accompanying drawings in which:

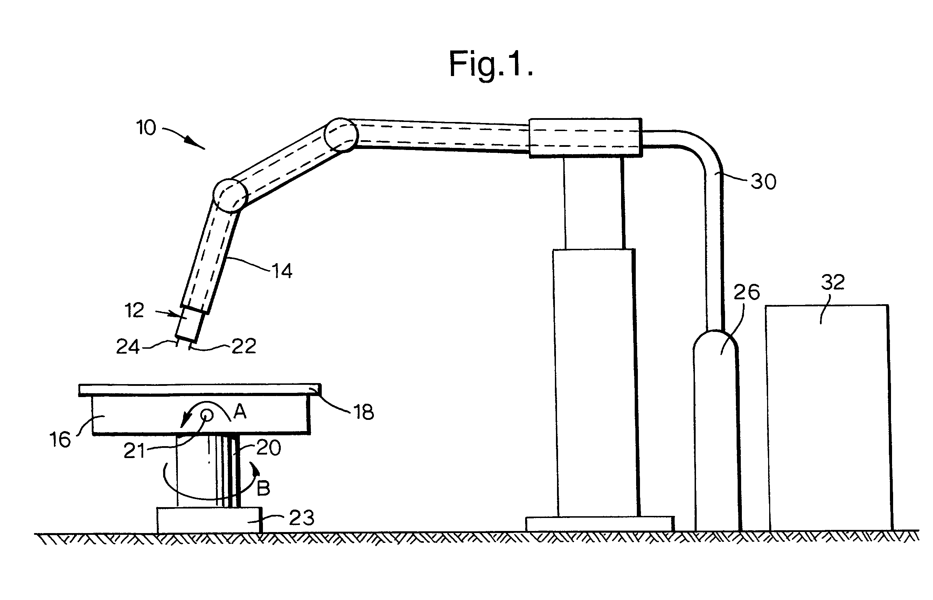

Fig. 1 is a schematic view of apparatus for forming a workpiece according to an embodiment of the present invention;
Fig. 2 is a diagrammatic view of a cross-section through a welding torch according to an embodiment of the present invention; and
Fig. 3 is an illustrative view of a component produced by the method and apparatus according to an embodiment of the present invention.

Apparatus 10 for forming a workpiece comprises a welding torch 12 attached to a computer controlled robot arm 14. A work table 16 is provided with a work surface 18 for receiving weld material from the weld torch 12. The workpiece is formed on the work surface 18. The table 16 is mounted on a pedestal 20 and is movable such that the work surface 18 lies at an angle of approximately 90° to the welding torch 12.

A number of metal wires 22,24 extend through the robot arm 14 from a supply in the form of a reel (not shown). The wires 22,24 are fed from the reel to the welding torch 12 such that the ends of the wires 22,24 extend just below the tip of the welding torch 12. The wires 22,24 are manufactured from a suitable welding material such as titanium.

The apparatus 10 also includes a supply of an inert gas, for example argon or a combination of inert and active gases. The supply of the gas is in the form of a cylinder 26 and a gas pipe 28 leads from the cylinder 26 to the welding torch 12 through arm 14. This gas allows the welding to take place in an inert environment thus avoiding oxidation of the workpiece in addition to being ionised to form the arc.

The table 16 is mounted for partial movement relative to the pedestal 20, as indicated by the arrow A, about a shaft 21. The support pedestal 20 in turn, is rotatably mounted as indicated by the arrow B upon a base 23.

Control means in the form of a computer 32 controls the movement of the table 16 and the robot arm 14 as well as controlling the supply of argon and feeding of the metal wires 22 and 24.

In operation, the table 16 and the welding torch 12 are both connected to a supply of electricity and argon is fed via the pipe 30 from the cylinder 26 to the head of the welding torch 12 to form an argon shroud around the welding torch 12 and which extends to the work surface 18. The wires 22,24 form electrodes as does the work surface 18 of the table 16. The argon gas between the wire electrodes 22,24 is ionised to create an electrical arc struck between the tips of the wires 22,24 and the work surface 18. The wires 22,24 are consumable as they act both as the arc initiator and also as the welding material. Once the electrical arc has been struck it is maintained by supplying a level of current or voltage depending on the type of weld desired.

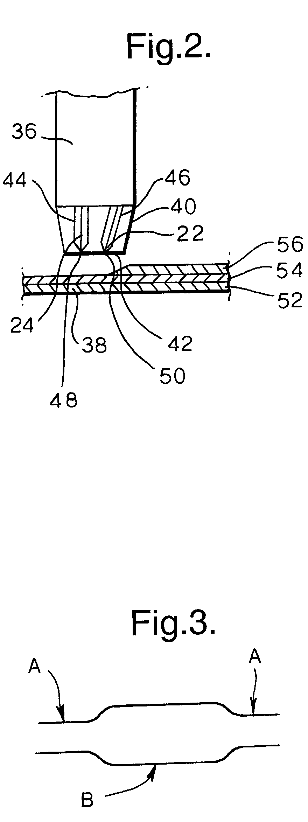

Now referring to Fig. 2 a base portion 36 of the welding torch 12 is shown adjacent a workpiece 38. A chromium plated copper or stainless steel shroud 40 surrounds all but a small portion of the wires 22,24. This shroud 40 contains argon gas which is directed out of the nozzle 42 of the shroud 40 during operation. The wires 22,24 are located within separate channels 44,46 of the shroud and extend through copper alloy contact tips 48,50 which guide the wires 22,24 into the correct position. The wires 22,24 are insulated from one another within the welding torch 12. The copper alloy contact tips 48,50 also provide the electric current to the wires and therefore maintain the correct arc welding conditions or parameters.

Fig. 3 shows a component formed by the welding process A and a thicker portion of the wall of the component where both wires 22,24 were utilised to provide localised thickening of the wall section is shown by B.

In use the wire weld material of each wire 22,24 melts under the heat produced by the arc and the position of the welding torch 12 relative to the table and work surface 18 is controlled by manipulating both the position of the welding torch 12 by moving the arm 14 and the position of the table 16. This control is effected by the control means 32. Thus, by appropriate manipulation of the welding torch 12 relative to the table 16 a component or workpiece, for example for use in a gas turbine engine, can be built up layer by layer by the deposition of the weld material from the wires 22,24. Such layers 52,54,56 are shown in Fig. 2.

The wires 22,24 are controlled via the computer controller 32 and the feed rates and voltages supplied may be controlled independently of each other. It is therefore possible to deposit varying thicknesses at particular locations during the building process of the workpiece by increasing the rate of one wire feed with respect to another. It is also possible to remove one wire feed during the welding process so that a thin wall may be formed.

The way in which the molten metal is transferred to the weld pool in the surface of the workpiece 38 is known as the transfer mechanism. Each transfer mechanism has different characteristics and thus is suitable for different types of weld, for example within the corner of a workpiece or to build onto a thin wall of a component.

There are three types of transfer mechanisms, short circuit (known as DIP), spray (or globular) and synergic. Each is dependent on the level of voltage or current supplied to the wires 22,24.

The short circuit transfer mechanism occurs when a lower level of voltage or current is supplied when compared to that needed for the other transfer mechanisms. In this transfer mechanism, the wire intermittently touches the weld pool thus providing short circuiting which produces increased resistance and hence heat which melts the end of the wires 22,24 and transfers molten metal to the weld pool.

Spray or globular transfer of molten metal to the weld pool occurs at a higher voltage than that needed for the short circuit transfer mechanism. In this case the arc comprises a higher arc energy which causes the wire 22,24 to melt and provide a spray or globular transfer of molten metal to the weld pool. The higher arc energy is caused by increased voltage which correspondingly produces a higher resistance and thus a higher arc energy.

A synergic transfer mechanism is a combination of both spray (or globular) transfer and short circuit transfer. In this case a voltage range is used which provides a controlled pulse of molten metal transferred from the wire 22,24 to the weld pool. With this transfer mechanism the wire 22,24 does not touch the surface of the workpiece 38 but is sufficiently distanced therefrom to prevent a spray or globular transfer mechanism being provided.

Each transfer mechanism is produced within different predetermined voltage ranges which also depend on the wire material characteristics and the wire diameter.

Each transfer mechanism also provides a different type of weld which are suitable for different applications. For example, the spray or globular transfer mechanism may be chosen for a corner weld where a large amount of energy is needed to transfer the molten metal into the corner section.

In general, a short circuit transfer mechanism is provided when an extremely small gap exists between the end of the wires 22,24 and the workpiece 38. For a synergic transfer mechanism a gap of approximately 3 to 4mm is usually provided and for a spray or globular transfer a gap of approximately 4 to 8mm is provided.

Each wire 22,24 can be provided with a pre-selected voltage chosen to provide a particular transfer mechanism. The provision of two adjacent wires 22,24 within the weld torch 12 allows a combination of transfer mechanisms to be employed thus allowing a greater variety of weld characteristics to be achieved.

It is also possible to change the transfer mechanism during the weld deposition process, for example a synergic transfer could be used by one or both wires 22,24 for the main weld deposition, then a lower voltage to provide a short circuit transfer mechanism for other features of the component to be produced.

Also it is possible to deposit weld material substantially faster than known processes, by using a plurality of wires. The wires 22,24 are located adjacent each other, and are angled toward one such that a narrower and higher weld bead 58 may be formed.

It is also envisaged that alternating current may be passed through one wire 22 whilst direct current may be passed through the adjacent wire 24. The electromagnetic fields around each wire 22,24 attract one another thus producing a narrower weld bead.

## Claims

1. Apparatus for forming a workpiece 38 comprising a welding head 12, said welding head 12 adapted to be located, in use, adjacent to a work surface 18 upon which the workpiece 38 is to be formed, at least two electrodes being partially located within said welding head 12 and extending therefrom, said electrodes comprising wires 22,24 formed from weld material such that when a current is passed through said wires 22,24 an electric arc is formed between each wire 22,24 and the work surface 18 such that the wires 22,24 and the work surface 18 become molten, **characterised in that** each of said wires 22,24 is controlled independently.

2. Apparatus for forming a workpiece 38 as claimed in claim 1 **characterised in that** the distance between said wire ends and said work surface 18 are independently controlled.

3. Apparatus for forming a workpiece 38 as claimed in claim 2 **characterised in that** at least one of said wires 22 is arranged such that one of its ends extends from the weld head 12 to a predetermined distance from said work surface 18 such that said distance is different to the distance between said work surface 18 and an adjacent wire end.

4. Apparatus for forming a workpiece 38 as claimed in any of claims 1 to 3 **characterised in that** the wires 22,24 are angled toward one another at their welding ends.

5. Apparatus for forming a workpiece 38 as claimed in any one of the preceding claims **characterised in that** the speed that each wire 22,24 is fed through the welding torch 12 is independently controlled.

6. Apparatus for forming a workpiece 38 as claimed in any one of the preceding claims **characterised in that** each of said wires 22,24 is located within a shroud of gas.

7. A method of forming a workpiece 38 comprising the steps of:
(a) providing at least two wires 22,24 of weld material within a welding head 12 positioned adjacent a work surface 18 upon which the workpiece 38 is to be formed;
(b) passing an electric current through said welding wires 22,24 such that each wire 22,24 forms an electrode and an electric arc is formed between the electrodes and the work surface 18;
(c) feeding said wires 22,24 through said welding head 12 such that a workpiece 38 of weld material is built up on said work surface 18, **characterised in that** each of said wires 22, 24 is controlled independently as it is fed through the welding head 12.

8. A method as claimed in claim 7 **characterised in that** the speed rate at which each wire 22,24 is fed through the welding head 12 is independently controlled.

9. A method as claimed in claim 7 or claim 8 **characterised in that** the voltage supplied to each wire 22,24 is different.

10. A method as claimed in claims 7 to 9 **characterised in that** the current supplied to each wire 22,24 is different.

11. A method as claimed in claims 7 to 10 **characterised in that** the current through at least one wire 22 is alternating current and the current passed through another wire 24 is direct current.

12. A method as claimed in claim 11 **characterised in that** the wire 22 having alternating current passed therethrough is adjacent a wire 24 having direct current passed therethrough.
